# EUROPEAN PATENT APPLICATION

(11) **EP 4 683 118 A1**
(43) Date of publication of application: **21.01.2026**
(21) Application number: 25177851.0
(22) Date of filing: 21.05.2025
(51) Int. Cl.: H01R 4/02, H01R 4/58, H01R 43/02, H01R 11/12, H01R 43/16

(54) **ELECTRICAL CONDUCTOR WITH FOIL ELECTRICAL CONTACT ON PLANAR SURFACE AND METHOD OF MANUFACTURING SAME**

(30) Priority: 18.07.2024 US 202418777026
(71) Applicant: Aptiv Technologies AG, 8200 Schaffhausen (CH)
(72) Inventor: HANDO, Nathan, 8200 Schaffhausen (CH); WEIDNER, Jonathan, 8200 Schaffhausen (CH); PETERSON, David, 8200 Schaffhausen (CH); HAMILTON, James, 8200 Schaffhausen (CH); GUTHRIE, William, 8200 Schaffhausen (CH); DURSE, Nicholas, 8200 Schaffhausen (CH)
(74) Representative: Bardehle Pagenberg Partnerschaft mbB Patentanwälte Rechtsanwälte

(57) **Abstract**

This disclosure presents an electrical assembly including an electrical conductor (102) with a planar connection surface (104) and an electrical contact (404) made of an electrically conductive foil (202) with distinct electrical and mechanical characteristics compared to the electrical conductor (102). The electrical contact (404) is positioned on a specific area of the connection surface (104) and is metallurgically bonded to it. This innovative electrical assembly allows for efficient electrical connections with improved performance and reliability due to the unique properties of the electrically conductive foil (202) and the metallurgical bonding process.

## Description

The subject matter disclosed herein relates to electrical conductors and, in particular, to electrical conductors, such as busbars, with foil electrical contacts on planar surfaces of the electrical conductors and methods for manufacturing such electrical conductors.

The terminal ends of busbars that are used to connect high current electrical circuits in electric vehicles have specially prepared contact surfaces configured to improve electrical conductivity and/or reliability of the electrical connection. Previously, these contact surfaces of the busbar were plated with a material such as tin, nickel, copper or silver. It has been found to be difficult to plate a busbar after it has been extruded because it requires extra processing and handling of the busbar. Additionally, the plating process may produce environmental contaminants.

In some aspects, the techniques described herein relate to an electrical assembly, including: an electrical conductor having a planar connection surface and an electrical contact formed of an electrically conducive foil having different electrical and mechanical properties than the electrical conductor and disposed on a discrete portion of the connection surface. The electrical contact is metallurgically bonded to the connection surface.

In some aspects, the techniques described herein relate to a method of manufacturing an electrical assembly. The method includes the steps of disposing an electrical contact formed of an electrically conducive foil on a discrete portion of a planar connection surface of an electrical conductor, the electrical contact having different electrical and mechanical properties than the electrical conductor and metallurgically bonding the electrical contact to the connection surface.
**FIG. 1** is an isometric view of electrical conductor according to some embodiments.
**FIG. 2** is an isometric view of a foil overlaying a connection surface of the electrical conductor of **FIG. 1** according to some embodiments.
**FIG. 3** is an isometric view of a tool metallurgically bonding the foil of **FIG. 2** to the electrical conductor of **FIG. 1** according to some embodiments.
**FIG. 4** **is** an isometric view of an electrical contact formed on the connection surface of the electrical conductor of FIG. 1 according to some embodiments.
**FIG. 5** is a bottom view of the tool of **FIG. 3** according to some embodiments.
**FIG. 6** is a cross-section view of the tool of **FIG. 3** according to some embodiments.
**FIG. 7** is an isometric view of a laser metallurgically bonding the foil of **FIG. 2** to the electrical conductor of **FIG. 1** according to some embodiments.
**FIG. 8** is a flow chart of a method **of** manufacturing an electrical assembly according to some embodiments.

The present disclosure describes an electrical assembly including an electrical conductor having a planar connection surface, such as a busbar used to provide high current electrical circuits in electric vehicles. The electrical conductor includes an electrical contact that is disposed on a discrete portion of the connection surface. The electrical contact is formed of an electrically conductive foil material that has different electrical and mechanical properties than the electrical conductor. The electrical contact is metallurgically bonded to the connection surface. Metallurgical bonding may involve welding (e.g., tortional ultrasonic welding), soldering, braising, cladding, sputtering, and other deposition processes. As used herein, the term metallurgically bonded excludes metallurgical bonding that involves chemical or electrochemical processes, such as electroless plating or electroplating processes.

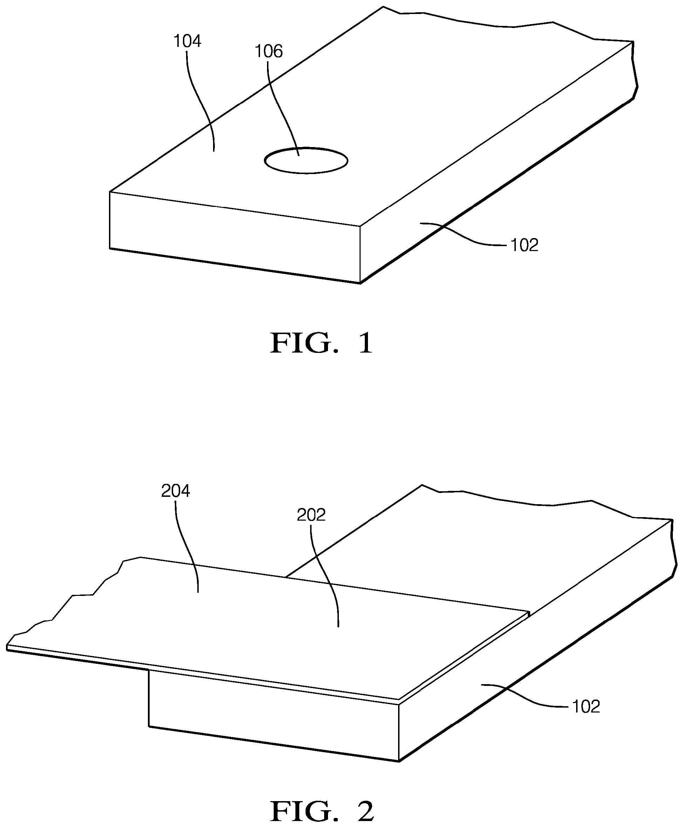

**FIG. 1** shows a non-limiting example of an electrical conductor 102 having a planar connection surface 104. The electrical conductor 102 in this nonlimiting example is an electrical busbar configured to connect high current electrical circuits in electric vehicles and is hereafter referred to as the busbar 102. The busbar 102 has a generally rectangular cross section and may be formed from a copper-based or aluminum-based material or any other suitable electrically conductive material. The connection surface 104 may define an aperture 106 extending through the busbar 102 that may be configured to accept a fastener (not shown) to attach the busbar 102 to another electrical conductor (not shown).

Other embodiments of the electrical conductor 102 may be envisioned in which the electrical conductor is a multi-strand wire cable with an end of the wire cable formed into a generally rectangular nugget which defines the planar connection surface 104. The nugget may be formed by welding the multiple strands together using an ultrasonic welding process.

**FIG. 2** shows an electrically conducive foil 202 overlaying a discrete portion of the connection surface 104 of the busbar 102. The foil 202 is formed from an electrically conductive material having different electrical and mechanical properties than the material forming the busbar 102. The material forming the foil 202 may include a tin-based material, a nickel-based material, a silver-based material, or copper-based material. The foil 202 may also include a combination of the previously listed material. As used herein, the term "X-based" means that the material has a composition that, along with other materials, contains at least 50% of material X. The foil 202 is much thinner than the busbar 102, e.g., having a thickness that is less than 10% of the busbar 102. The thickness of the foil 202 is preferably less than 0.5 millimeter (mm). Testing has found that a foil thickness of 0.1 to 0.2 mm is even more preferable by providing satisfactory results when metallurgically bonding the foil 202 to the connection surface 104 using a tortional ultrasonic welding method. The foil 202 may be dispensed as a strip 204 from a roll of foil (not shown).

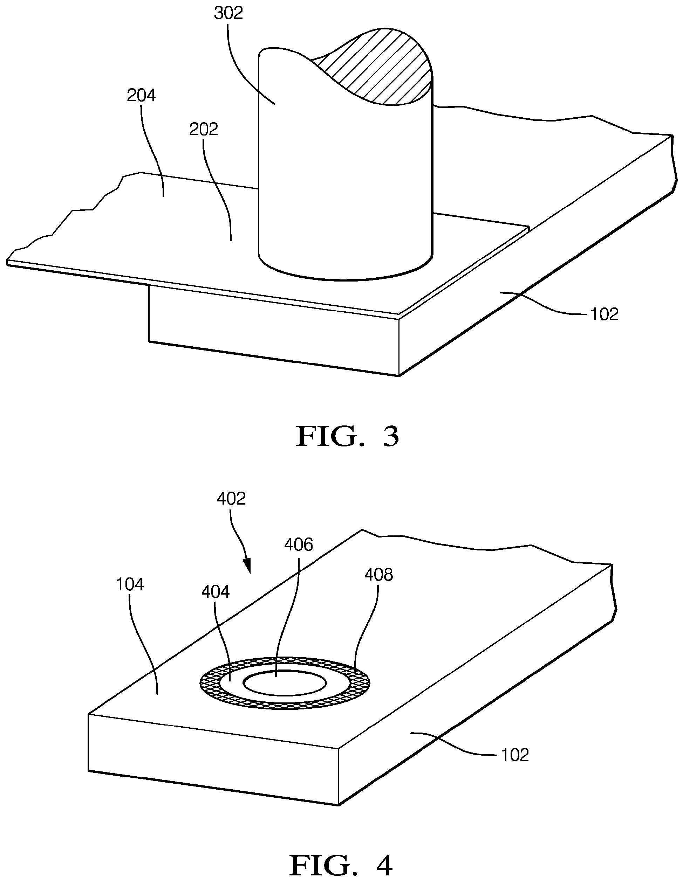

**FIG. 3** shows the foil 202 being metallurgically bonded to the connection surface 104 of the busbar 102 using a tool 302, in this example, the tool 302 is a cylindrical sonotrode of a torsional ultrasonic welding device. A torsional ultrasonic welding device uses rotational vibration of the sonotrode rather than linear vibration to deliver the welding energy to the workpieces, in this case the foil 202 and the busbar 102. In other embodiments, the tool 302 may be an electrode of a resistance welding or soldering device.

**FIG. 4** shows an electrical conductor assembly 402 with an electrical contact 404 metallurgically bonded to the connection surface 104 of the busbar 102. In addition to metallurgically bonding the electrical contact 404 to the connection surface 104, the tool 302 may also be configured to cut the electrical contact 404 from the strip 204 of foil 202. The tool 302 may be further configured to cut an aperture 406 in the electrical contact 404 aligned with the aperture 106 in the busbar 102.

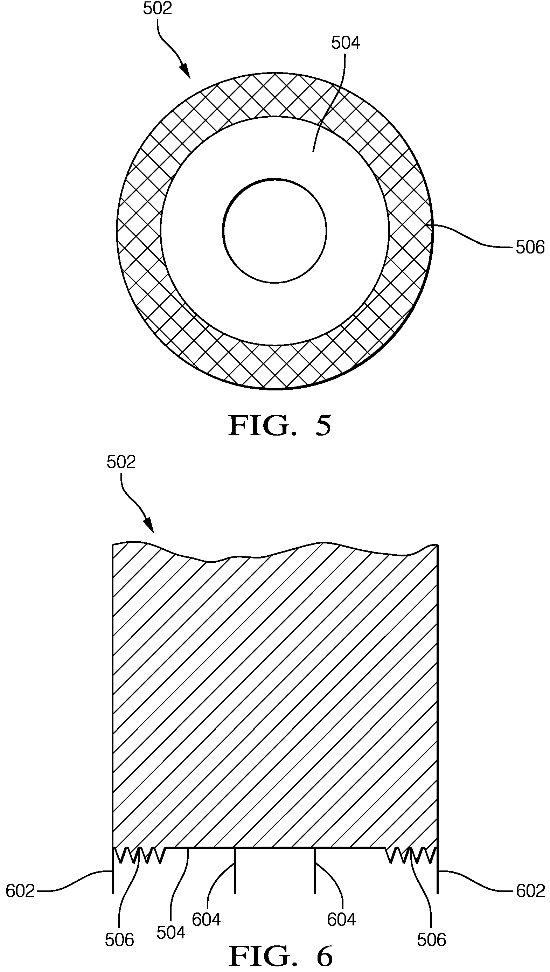

**FIG. 5 and 6** show a non-limiting example of a sonotrode 502 of a torsional ultrasonic welding device. As shown in **FIG. 5****,** a bottom work surface 504 of the sonotrode has a circumferential knurled area 506 that is configured to impart the rotational vibration energy from the torsional ultrasonic welding device to the workpieces, i.e., the foil 202 and busbar 102. A region 408 where the knurled area 506 of the sonotrode contacts the foil 202 can be seen in **FIG. 4****.** As can best be seen in **FIG. 6****,** the sonotrode 502 has an outer cutting lip 602 that is configured to cut the electrical contact free of the strip 204 and a mesial projection or inner cutting lip 604 that is configured to cut the aperture 406 in the electrical contact 404.

In other embodiments, the tool 302 shown in FIG. 3 may be an electrode of a resistance welding or soldering device. In yet other embodiments the foil 202 may be metallurgically bonded to the busbar 102 by braising, cladding, sputtering, or other deposition processes.

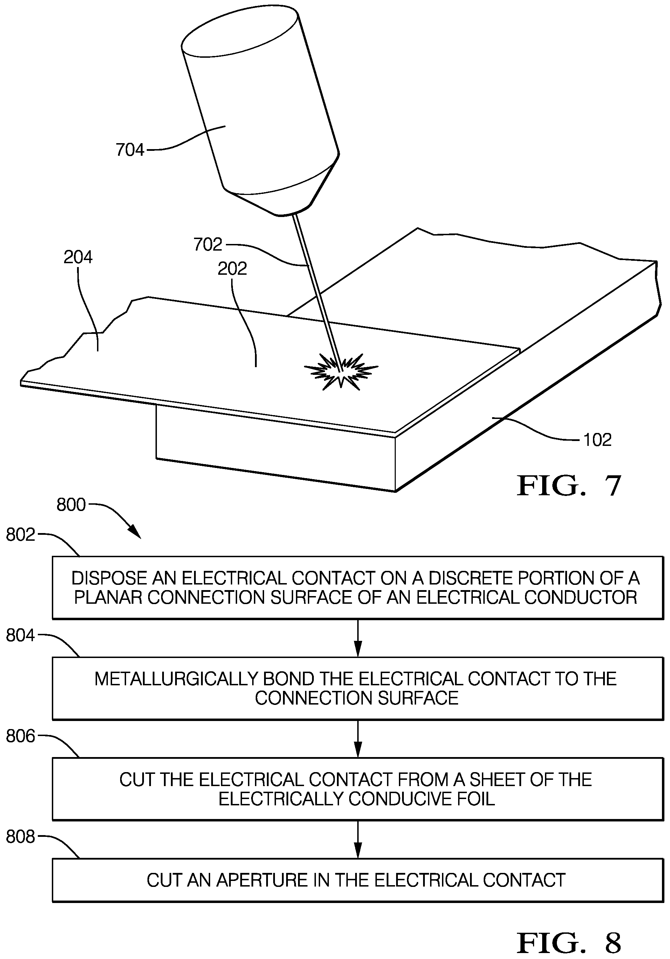

**FIG. 7** shows yet another embodiment in which the foil 202 is metallurgically bonded to the busbar 102 using a laser beam 702 generated and directed by a laser welding device 704 to create the electrical contact 404. The laser welding device 704 may also be configured use the laser beam 702 to cut the electrical contact 404 from the foil strip 204 and to cut the aperture 406 in the electrical contact 404 aligned with the aperture 106 in the busbar 102, thereby providing the electrical conductor assembly 402 shown in **FIG. 4****.**

**FIG. 8** shows a flow chart of a method 800 of manufacturing an electrical assembly. The method 800 includes the following steps:

At STEP 802, an electrical contact 404 is disposed on a discrete portion of a planar connection surface 104 of an electrical conductor or busbar 102. The electrical contact 404 is formed of an electrically conducive foil 202 having different electrical and mechanical properties than the busbar 102. The foil 202 has a thickness of less than 0.5 millimeter, preferably having a thickness of 0.1 to 0.2 millimeter.

At STEP 804, the electrical contact 404 is metallurgically bonded to the connection surface 104. The electrical contact 404 may be bonded to the connection surface 104 by using a tool 302, such as an ultrasonic welding device comprising a sonotrode, e.g., a torsion ultrasonic welding device, or a laser welding device.

AT STEP 806, the electrical contact 404 is cut from a strip 204 of the electrically conducive foil 202. The sonotrode 502 of the ultrasonic welding device may define a distal projection or outer cutting lip 602 that is configured to cut through the foil 202, thereby cutting the electrical contact 404 from the strip 204 of the electrically conducive foil 202 using the outer cutting lip 602. The laser welding device 704 may also be configured to cut through the foil 202, thereby cutting the electrical contact 404 from the strip 204 of the electrically conducive foil 202 using the laser beam 702.

At STEP 808, an aperture 406 is cut in the electrical contact 404. The sonotrode of the ultrasonic welding device may define a mesial projection configured to cut through the foil 202, thereby forming the aperture 406 in the electrical contact 404. The laser welding device 704 may also be configured to cut the aperture 406 in the electrical contact 404 using the laser beam 702.

### Discussion of Possible Embodiments

The following are non-exclusive descriptions of possible embodiments of the present invention.

In some aspects, the techniques described herein relate to an electrical assembly, including: an electrical conductor having a planar connection surface and an electrical contact formed of an electrically conducive foil having different electrical and mechanical properties than the electrical conductor and disposed on a discrete portion of the connection surface. The electrical contact is metallurgically bonded to the connection surface.

The assembly of the preceding paragraph can optionally include, additionally and/or alternatively any, one or more of the following features/steps, configurations and/or additional components.

In some aspects, the techniques described herein relate to an electrical assembly, wherein the electrical conductor includes an electrical busbar having a generally rectangular cross-section and includes a copper-based material or an aluminum-based material.

In some aspects, the techniques described herein relate to an electrical assembly, wherein the electrical contact is thermally metallurgically bonded to the connection surface.

In some aspects, the techniques described herein relate to an electrical assembly, wherein the electrical contact is metallurgically bonded to the connection surface using a laser welding process.

In some aspects, the techniques described herein relate to an electrical assembly, wherein the electrical contact is metallurgically bonded to the connection surface using an ultrasonic welding process.

In some aspects, the techniques described herein relate to an electrical assembly, wherein the ultrasonic welding process is a torsion ultrasonic welding process.

In some aspects, the techniques described herein relate to an electrical assembly, wherein the foil has a thickness of less than 0.5 millimeter.

In some aspects, the techniques described herein relate to an electrical assembly, wherein the foil has a thickness of 0.1 to 0.2 millimeter.

In some aspects, the techniques described herein relate to an electrical assembly, wherein a material forming the foil includes at least one material selected from a list consisting of such as a tin, nickel, silver, or copper-based material.

In some aspects, the techniques described herein relate to a method of manufacturing an electrical assembly. The method includes the steps of disposing an electrical contact formed of an electrically conducive foil on a discrete portion of a planar connection surface of an electrical conductor, the electrical contact having different electrical and mechanical properties than the electrical conductor and metallurgically bonding the electrical contact to the connection surface.

The method of the preceding paragraph can optionally include, additionally and/or alternatively any, one or more of the following features/steps, configurations and/or additional components.

In some aspects, the techniques described herein relate to a method, wherein the foil has a thickness of less than 0.5 millimeter.

In some aspects, the techniques described herein relate to a method, wherein the foil has a thickness of 0.1 to 0.2 millimeter.

In some aspects, the techniques described herein relate to a method, further including cutting the electrical contact from a sheet of the electrically conducive foil.

In some aspects, the techniques described herein relate to a method, further including cutting an aperture in the electrical contact.

In some aspects, the techniques described herein relate to a method, wherein the electrical contact is metallurgically bonded to the connection surface by using a welding device.

In some aspects, the techniques described herein relate to a method, wherein the welding device is an ultrasonic welding device including a sonotrode.

In some aspects, the techniques described herein relate to a method, wherein the ultrasonic welding device is a torsion ultrasonic welding device.

In some aspects, the techniques described herein relate to a method, wherein the sonotrode defines a distal projection configured to cut through the foil and wherein method further includes cutting the electrical contact from a sheet of the electrically conducive foil using the distal projection.

In some aspects, the techniques described herein relate to a method, further including cutting an aperture in the electrical contact using a mesial projection defined by the sonotrode and configured to cut through the foil.

In some aspects, the techniques described herein relate to a method, wherein the electrical contact is metallurgically bonded to the connection surface using a laser welding device.

While the invention has been described with reference to an exemplary embodiment(s), it will be understood by those skilled in the art that various changes may be made, and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the disclosed embodiment(s), but that the invention will include all embodiments falling within the scope of the appended claims.

As used herein, 'one or more' includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Additionally, while terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. An electrical assembly, comprising:
an electrical conductor (102) having a planar connection surface (104); and
an electrical contact (404) formed of an electrically conducive foil (202) having different electrical and mechanical properties than the electrical conductor (102) and disposed on a discrete portion of the connection surface (104), the electrical contact (404) being metallurgically bonded to the connection surface (104).

2. The electrical assembly in accordance with claim 1, wherein the electrical conductor (102) comprises an electrical busbar (102) having a generally rectangular cross-section and comprises a copper-based material or an aluminum-based material.

3. The electrical assembly in accordance with claim 1 or 2, wherein the electrical contact (404) is thermally metallurgically bonded to the connection surface (104).

4. The electrical assembly in accordance with claim 3, wherein the electrical contact (404) is metallurgically bonded to the connection surface (104) using a laser welding process.

5. The electrical assembly in accordance with claim 3 or 4, wherein the electrical contact (404) is metallurgically bonded to the connection surface (104) using an ultrasonic welding process.

6. The electrical assembly in accordance with claim 5, wherein the ultrasonic welding process is a torsion ultrasonic welding process.

7. The electrical assembly in accordance with any one of the preceding claims, wherein the foil (202) has a thickness of less than 0.5 millimeter.

8. The electrical assembly in accordance with claim 7, wherein the foil (202) has a thickness of 0.1 to 0.2 millimeter.

9. The electrical assembly in accordance with claim 7 or 8, wherein a material forming the foil (202) comprises at least one material selected from a list consisting of a tin-based material, a nickel-based material, a silver-based material, and a copper-based material.

10. A method (800) of manufacturing an electrical assembly, comprising:
disposing an electrical contact (404) formed of an electrically conducive foil (202) on a discrete portion of a planar connection surface (104) of an electrical conductor (102), the electrical contact (404) having different electrical and mechanical properties than the electrical conductor (102); and
metallurgically bonding the electrical contact (404) to the connection surface (104).

11. The method (800) in accordance with claim 10, further comprising cutting the electrical contact (404) from a sheet of the electrically conducive foil (202).

12. The method (800) in accordance with claim 10 or 11, further comprising cutting an aperture (406) in the electrical contact (404).

13. The method (800) in accordance with any one of claims 10 to 12, wherein the electrical contact (404) is metallurgically bonded to the connection surface (104) by using a torsion ultrasonic welding device having a sonotrode (502).

14. The method (800) in accordance with claim 13, wherein the sonotrode (502) defines a distal projection configured to cut through the foil (202) and wherein method (800) further comprises cutting the electrical contact (404) from a sheet of the electrically conducive foil (202) using the distal projection.

15. The method (800) in accordance with claim 14, further comprising cutting an aperture (406) in the electrical contact (404) using a mesial projection defined by the sonotrode (502) and configured to cut through the foil (202).
